# EUROPEAN PATENT APPLICATION

(11) **EP 2 615 151 A1**
(43) Date of publication of application: **17.07.2013**
(21) Application number: 11306773.0
(22) Date of filing: 23.12.2011
(51) Int. Cl.: C09K 8/42, C09K 8/467, C04B 16/04, C04B 28/02

(54) **Compositions and methods for well cementing**

(71) Applicant: Services Pétroliers Schlumberger, 75007 Paris (FR); Schlumberger Technology B.V., 2514 The Hague (NL); Schlumberger Holdings Limited, Tortola (VG); PRAD Research and Development, Tortola (VG)
(72) Inventor: Carelli, Clara, 92142 clamart (FR); leroy delage, sylvaine, 92142 clamart (FR)
(74) Representative: Vandermolen, Mathieu

(57) **Abstract**

A self-healing cement for use in wells in which acid gases are injected, stored or extracted, comprises an acid-swelling material. In the event of cement-matrix failure, or bonding failure between the cement/casing interface or the cement/borehole-wall interface, the material swells when contacted by acid gases, including carbon dioxide and hydrogen sulfide. The swelling seals voids in the cement matrix, or along the bonding interfaces, thereby restoring zonal isolation. The acid swelling material may also be used without cement for remedial treatments to restore zonal isolation.

## Description

### BACKGROUND

The statements in this section merely provide background information related to the present disclosure and may not constitute prior art.

This disclosure relates to compositions and methods for treating subterranean formations, in particular, compositions and methods for cementing and completing wells in which acid gases reside, are injected, stored or recovered.

During the construction of subterranean wells, it is common, during and after drilling, to place a tubular body in the wellbore. The tubular body may comprise drillpipe, casing, liner, coiled tubing or combinations thereof. The purpose of the tubular body is to act as a conduit through which desirable fluids from the well may travel and be collected. The tubular body is normally secured in the well by a cement sheath. The cement sheath provides mechanical support and hydraulic isolation between the zones or layers that the well penetrates. The latter function is important because it prevents hydraulic communication between zones that may result in contamination. For example, the cement sheath blocks fluids from oil or gas zones from entering the water table and polluting drinking water. In addition, to optimize a well's production efficiency, it may be desirable to isolate, for example, a gas-producing zone from an oil-producing zone.

The cement sheath achieves hydraulic isolation because of its low permeability. In addition, intimate bonding between the cement sheath and both the tubular body and borehole is necessary to prevent leaks. However, over time the cement sheath can deteriorate and become permeable. Alternatively, the bonding between the cement sheath and the tubular body or borehole may become compromised. The principal causes of deterioration and debonding include physical stresses associated with tectonic movements, temperature changes, pressure changes inside the casing and chemical deterioration of the cement.

There have been several proposals to deal with the problems of cement-sheath deterioration. One approach is to design the cement sheath to mechanically survive physical stresses that may be encountered during its lifetime. Another approach is to employ additives that improve the physical properties of the set cement. Amorphous metal fibers may be added to improve the strength and impact resistance. Flexible materials (rubber or polymers) may be added to confer a degree of flexibility to the cement sheath. Or, cement compositions may be formulated to be less sensitive to temperature fluctuations during the setting process.

A number of proposals have been made concerning "self-healing" concretes in the construction industry. The concept involves the release of chemicals inside the set-concrete matrix. The release is triggered by matrix disruption arising from mechanical or chemical stresses. The chemicals are designed to restore and maintain the concrete-matrix integrity. None of these concepts are immediately applicable to well-cementing operations because of the need for the cement slurry to be pumpable during placement, and because of the temperature and pressure conditions associated with subterranean wells.

More recently, self-healing cement systems have been developed that are tailored to the mixing, pumping and curing conditions associated with cementing subterranean wells. One approach is to add superabsorbent polymers that may be encapsulated. If the permeability of the cement matrix rises, or the bonding between the cement sheath and the tubular body or borehole wall is disrupted, the superabsorbent polymer becomes exposed to formation fluids. Most formation fluids contain some water, and the polymer swells upon water contact. The swelling fills voids in the cement sheath, restoring the low cement-matrix permeability. Likewise, should the cement/tubular body or cement/borehole wall bonds become disrupted, the polymer will swell and restore isolation. Another approach involves the addition of rubber particles that swell when exposed to hydrocarbons. Like the superabsorbent polymers, the swelling of the rubber particles restores and maintains zonal isolation.

Some oil and gas fields have formations whose fluids contain acid gases such as carbon dioxide and hydrogen sulfide. Such wells may be challenging from a zonal isolation point of view. Carbon dioxide injection is a well-known enhanced oil recovery (EOR) technique. In addition, there are some oil and gas wells whose reservoirs naturally contain carbon dioxide.

A relatively new category of wells involving carbon dioxide is associated with carbon-sequestration projects. Carbon sequestration is a geo-engineering technique for the long-term storage of carbon dioxide or other forms of carbon, for various purposes such as the mitigation of climate change. Carbon dioxide may be captured as a pure byproduct in processes related to petroleum refining or from the flue gases from power plants that employ fossil fuels. The gas is then usually injected into subsurface saline aquifers or depleted oil and gas reservoirs. One of the challenges is to trap the carbon dioxide and prevent leakage back to the surface; maintaining a competent and impermeable cement sheath is a critical requirement.

Oil and gas that contains elevated amounts of hydrogen sulfide are called "sour." It has been estimated that 15 to 25% of natural gas in the United States may contain hydrogen sulfide. Worldwide, the percentage could be as high as 30%. Hydrogen sulfide is a toxic substance; therefore, it is important to prevent it from escaping through the cement sheath into aquifers or to the surface. Furthermore, hydrogen sulfide is corrosive to steel, and maintaining a competent cement sheath is essential to prevent casing deterioration during the life of the well.

### SUMMARY

The previously disclosed self-healing cement systems are concerned with traditional wells and swell when contacted by water and/or hydrocarbons; none of these aims at behavior of the cement sheath when contacted by carbon dioxide or hydrogen sulfide. The Applicant discloses herein cements that have self-healing properties in the presence of these acid gases.

In an aspect, embodiments relate to compositions comprising water, a cement and at least one material that swells when contacted by a fluid with a pH lower than about 6. The material preferably comprises an acid swellable polymer, more preferably an acid swellable polymer latex. The preferred acid swellable polymer is an amine polyacrylate copolymer. The cement is preferably Portland cement, and the composition may further comprise additives including (but not limited to) dispersing agents, fluid-loss-control agents, retarders, accelerators, gas-generating agents, antifoam agents and combinations thereof.

In a further aspect, embodiments relate to methods for maintaining zonal isolation in a subterranean well having a borehole in which fluids having a pH lower than about 6 reside or are injected, stored or extracted. An aqueous cement slurry is placed in the annulus between casing and the borehole wall or between casing and a previously installed casing string. The cement slurry comprises a material that swells when contacted by a fluid with a pH lower than about 6. In the event of cement-matrix or bonding failure after the cement sets, the set cement may be exposed to wellbore fluids having a pH lower than about 6. The acid-swellable material may expand, thereby restoring zonal isolation. The wellbore fluids may comprise carbon dioxide, hydrogen sulfide, or both.

In yet a further aspect, embodiments relate to methods for cementing a subterranean well having a borehole in which fluids having a pH lower than about 6 reside or are injection, stored or extracted. An aqueous cement slurry is placed in the annulus between casing and the borehole wall or between casing and a previously installed casing string. The cement slurry comprises a material that swells when contacted by a fluid with a pH lower than about 6. The cement slurry is allowed to set in the annulus. The wellbore fluids may comprise carbon dioxide, hydrogen sulfide, or both.

This summary is provided to introduce a selection of concepts that are further described below in the detailed description. This summary is not intended to identify key or essential features of the claimed subject matter, nor is it intended to be used as an aid in limiting the scope of the claimed subject matter.

### BRIEF DESCRIPTION OF THE DRAWINGS

Figure 1 presents rheological properties of an amine polyacrylate copolymer emulsion at 25°C.

Figure 2 presents a comparison of the rheological properties of an amine polyacrylate copolymer emulsion at 25°C, with and without titanium dioxide particles.

### DETAILED DESCRIPTION

At the outset, it should be noted that in the development of any such actual embodiment, numerous implementation—specific decisions must be made to achieve the developer's specific goals, such as compliance with system related and business related constraints, which will vary from one implementation to another. Moreover, it will be appreciated that such a development effort might be complex and time consuming but would nevertheless be a routine undertaking for those of ordinary skill in the art having the benefit of this disclosure. In addition, the composition used/disclosed herein can also comprise some components other than those cited. In the summary and this detailed description, each numerical value should be read once as modified by the term "about" (unless already expressly so modified), and then read again as not so modified unless otherwise indicated in context. Also, in the summary and this detailed description, it should be understood that a concentration range listed or described as being useful, suitable, or the like, is intended that any and every concentration within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that inventors appreciate and understand that any and all data points within the range are to be considered to have been specified, and that inventors possessed knowledge of the entire range and all points within the range.

As stated earlier, self-healing cement systems that operate in an environment containing acid gases would be an improvement in the industry. In a manner analogous to the self-healing mechanisms described earlier, such cement systems would contain materials that swell in the presence of low-pH fluids. And, the amount of swelling would be sufficient to close voids that may appear in the cement sheath. The inventors have determined that cement slurries containing an acid swelling material have self-healing properties when exposed to acid gases.

In an aspect, embodiments relate to a composition comprising water, a cement and a material that swells when contacted by a fluid with a pH lower than about 6. The material is preferably an acid swellable polymer, more preferably an acid swellable polymer latex. The material most preferably comprises an amine polyacrylate copolymer, whose active concentration in the composition is preferably between about 1% and 40% by volume of solids, and more preferably between about 5% and 20% by volume of solids.

The cement slurry may comprise Portland cement, calcium aluminate cement, fly ash, blast furnace slag, lime-silica blends, geopolymers, zeolites, Sorel cements, or chemically bonded phosphate ceramics, or combinations thereof. Of these, Portland cement is preferred.

The composition may further comprise additives including (but not limited to) dispersing agents, fluid-loss-control agents, retarders, accelerators, gas-generating agents, antifoam agents and combinations thereof.

The composition is preferably pumpable. Those skilled in the art will recognize that a pumpable fluid in the context of well cementing has a viscosity lower than about 1000 mPa-s at a shear rate of 100 s⁻¹ at the temperatures to which the fluid is exposed during a cementing operation, and during the time necessary to place the composition in the well.

In a further aspect, embodiments relate to methods for maintaining zonal isolation in a subterranean well having a borehole, in which fluids with a pH lower than about 6 reside or are injected, stored or extracted. A tubular body is installed inside the borehole of the well, or inside a previously installed tubular body, thereby creating an annular region between the tubular body and the borehole wall, or between the tubular body and the previously installed tubular body. An aqueous cement slurry is provided that comprises a material that swells when contacted by a fluid having a pH lower than about 6. The slurry is placed in the annular region and allowed to set and harden. In the event of cement-matrix or bonding failure, the set cement may become exposed to at least one fluid having a pH lower than about 6. The acid-swelling material therein is allowed to swell, thereby sealing cracks, voids and fissures within the cement matrix, or microannuli between the cement sheath and the casing, the cement sheath and the borehole wall (or previously installed casing), or both. Such swelling may restore zonal isolation in the well.

The material may comprise an acid-swellable polymer, preferably an acid-swelling latex. The material preferably comprises an amine polyacrylate copolymer, whose active concentration in the cement matrix is preferably between about 1% and 40% by volume of solids in the cement slurry, and more preferably between about 5% and 20% by volume of solids in the cement slurry. The fluid may comprise carbon dioxide, hydrogen sulfide or a combination thereof.

The cement slurry may comprise Portland cement, calcium aluminate cement, fly ash, blast furnace slag, lime-silica blends, geopolymers, zeolites, Sorel cements, or chemically bonded phosphate ceramics, or combinations thereof. Of these, Portland cement is preferred. The cement slurry may further comprise dispersing agents, fluid-loss-control agents, set retarders, set accelerators, gas-generating agents and antifoaming agents.

Persons skilled in the art will recognize that these methods may be performed during a primary cementing operation or a remedial cementing operation. The primary cementing operation may be performed the traditional way (i.e., the slurry is pumped down the casing and up the annulus) or by "reverse cementing," which consists of pumping the slurry down the annulus. Remedial cementing operations may include the setting of cement plugs and squeeze-cementing operations to restore zonal isolation or seal perforations. The slurry may be pumped through tubular bodies such as (but not limited to) drillpipe or coiled tubing, or placed by the dump bailer technique.

In yet a further aspect, embodiments relate to methods for cementing a subterranean well having a borehole in which fluids having a pH lower than 6 reside, or are injected, stored or extracted. A tubular body is installed inside the borehole of the well, or inside a previously installed tubular body, thereby creating an annular region between the tubular body and the borehole wall, or between the tubular body and the previously installed tubular body. An aqueous cement slurry is provided that comprises a material that swells when contacted by a fluid having a pH lower than about 6. The slurry is placed in the annular region and allowed to set and harden.

The material may comprise an acid-swellable polymer, preferably an acid-swelling latex. The material preferably comprises an amine polyacrylate copolymer, whose active concentration in the cement matrix is preferably between about 1% and 40% by volume of solids in the cement slurry, and more preferably between about 5% and 20% by volume of solids in the cement slurry. The fluid may comprise carbon dioxide, hydrogen sulfide or a combination thereof.

The cement slurry may comprise Portland cement, calcium aluminate cement, fly ash, blast furnace slag, lime-silica blends, geopolymers, zeolites, Sorel cements, or chemically bonded phosphate ceramics, or combinations thereof. Of these, Portland cement is preferred. The cement slurry may further comprise dispersing agents, fluid-loss-control agents, set retarders, set accelerators, gas-generating agents and antifoaming agents.

Persons skilled in the art will recognize that these methods may be performed during a primary cementing operation or a remedial cementing operation. The primary cementing operation may be performed the traditional way (i.e., the slurry is pumped down the casing and up the annulus) or by "reverse cementing," which consists of pumping the slurry down the annulus. Remedial cementing operations may include the setting of cement plugs and squeeze-cementing operations to restore zonal isolation or seal perforations. The slurry may be pumped through tubular bodies such as (but not limited to) drillpipe or coiled tubing, or placed by the dump bailer technique.

Those skilled in the art will recognize that the disclosed methods pertain not only to wells where fluids are injected, stored or extracted, but also to monitoring wells that, for example, provide long-term surveillance of the behavior of a subterranean formation or to geothermal wells.

### EXAMPLES

The following examples serve to further illustrate the disclosure.

The examples are focused on a commercial product, Algogum L-520, available from Akzo Nobel. It is an aqueous latex containing an amine polyacrylate copolymer. The copolymer concentration was about 20 wt%.

### EXAMPLE 1

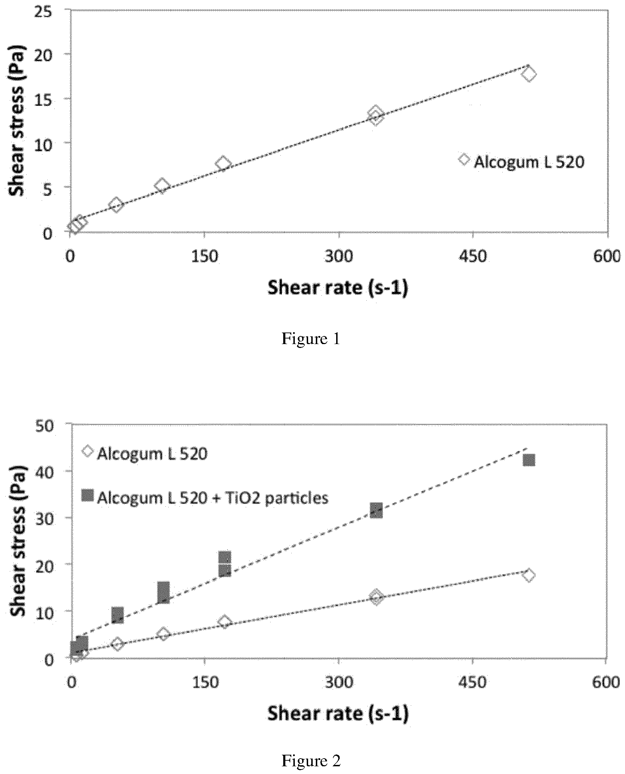

Rheological measurements were performed with Algogum L-520 at 25°C. The values of shear stress as a function of shear rate are found in Fig. 1. Using the Bingham model, the plastic viscosity was about 34 mPa-s, and the yield stress was 0.97 N/m² (2 lbf/100 ft²). Such rheological properties, coupled with the small latex particles, gives Algogum L-520 excellent capability to penetrate small cracks or voids in the formation or the cement sheath.

### EXAMPLE 2

An acid solution was prepared by mixing 20 wt% citric acid in deionized water. Different amounts of the citric acid solution were added to 25 g of Algogum L-520. The plastic viscosity (PV) of the mixtures increased with citric-acid concentration, and a resilient gel formed at higher citric acid concentrations. Results are presented in Table 1.

**Table 1. Viscosity of blends of citric acid and Algogum L-520**

| **Blend** | **20% Citric acid solution (wt%)** | **Alcogum L-520 (wt%)** | **Viscosity After Mixing** |
|---|---|---|---|
| 1 | 0.5 | 99.5 | PV < 100 **mPa-s** |
| 2 | 1 | 99 | PV < 300 **mPa-s** |
| 3 | 3 | 97 | High viscosity liquid/ gel |
| 4 | 5 | 95 | Gel |
| 5 | 10 | 90 | Gel |
| 6 | 20 | 80 | Gel |

### EXAMPLE 3

A fluid was prepared consisting of 90 wt% Algogum L-520 and 10 wt% titanium dioxide particles. Rheology measurements were performed at 25°C, and the results are presented in Fig. 2. Applying the Bingham model, the plastic viscosity (PV) was about 80 mPa-s, and the yield stress was about 3.9 N/m² (8 lbf/100 ft²).

The blend was then mixed with the citric acid solution described in Example 2. The blend contained 4.7 wt% citric-acid solution. A flexible and elastic gel formed.

Although only a few example embodiments have been described in detail above, those skilled in the art will readily appreciate that many modifications are possible in the example embodiments without materially departing from this disclosure. Accordingly, all such modifications are intended to be included within the scope of this disclosure as defined in the following claims.

## Claims

1. A composition, comprising water, a cement and a material that swells when contacted by a fluid with a pH lower than about 6.

2. The composition of claim 1, wherein the material comprises an acid swellable polymer.

3. The composition of claim 1 or 2, wherein the material comprises an acid swellable latex.

4. The composition of any one of claims 1-3, wherein the material comprises an amine polyacrylate copolymer.

5. The composition of any one of claims 1-4, wherein the concentration of the material in the cement slurry is between about 1 percent and about 40 percent by volume of solids.

6. The composition of any one of claims 1-5, wherein the cement comprises Portland cement, calcium aluminate cement, fly ash, blast furnace slag, lime-silica blends, geopolymers, zeolites, Sorel cements, or chemically bonded phosphate ceramics, or combinations thereof.

7. The composition of any one of claims 1-6, wherein the cement slurry further comprises dispersing agents, fluid-loss-control agents, set retarders, set accelerators, gas-generating agents or antifoaming agents, and combinations thereof.

8. A method for maintaining zonal isolation in a subterranean well having a borehole in which fluids having a pH lower than about 6 reside or are injected, stored or extracted, comprising:
(i) installing a tubular body inside the borehole of the well, or inside a previously installed tubular body, thereby creating an annular region between the tubular body and the borehole wall, or between the tubular body and the previously installed tubular body;
(ii) providing a cement slurry comprising water, a cement and a material that swells when contacted by a fluid with a pH lower than about 6.
(iii) placing the slurry in the annular region;
(iv) allowing the cement slurry to set and harden;
(v) in the event of cement-matrix or bonding failure, exposing the set cement to at least one fluid having a pH lower than about 6; and
(vi) allowing the material to swell, thereby restoring zonal isolation.

9. A method for cementing a subterranean well having a borehole in which fluids having a pH lower than 6 reside, or are injected, stored or extracted, comprising:
(i) installing a tubular body inside the borehole of the well, or inside a previously installed tubular body, thereby creating an annular region between the tubular body and the borehole wall, or between the tubular body and the previously installed tubular body;
(ii) providing a cement slurry comprising water, a cement and a material that swells when contacted by a fluid with a pH lower than about 6.
(iii) placing the slurry in the annular region; and
(iv) allowing the cement slurry to set and harden.

10. The method of claim 8 or 9, wherein the fluid comprises carbon dioxide, hydrogen sulfide or a combination thereof.

11. The method of any one of claims 8-10, wherein the material comprises an acid swellable polymer.

12. The method of any one of claims 8-11, wherein the material comprises an acid swellable latex.

13. The method of any one of claims 8-12, wherein the material comprises an amine polyacrylate copolymer.

14. The method of any one of claims 8-13, wherein the concentration of the material in the cement slurry is between about 1 percent and about 40 percent by volume of solids.

15. The method of any one of claims 8-14, wherein the cement comprises Portland cement, calcium aluminate cement, fly ash, blast furnace slag, lime-silica blends, geopolymers, zeolites, Sorel cements, or chemically bonded phosphate ceramics, or combinations thereof.
